(19) Europäisches Patentamt
European Patent Office
Office européen des brevets

(11) **EP 2 191 611 B1**

(12) **EUROPEAN PATENT SPECIFICATION**

(45) Date of publication and mention of the grant of the patent:
**01.06.2011 Bulletin 2011/22**

(51) Int Cl.:
*H04L 12/24* (2006.01)  *H04L 29/06* (2006.01)
*G01R 31/08* (2006.01)

(21) Application number: **08804703.0**

(22) Date of filing: **24.09.2008**

(86) International application number:
**PCT/EP2008/062803**

(87) International publication number:
**WO 2009/040385 (02.04.2009 Gazette 2009/14)**

(54) **DESIGNING A NETWORK**

ENTWURF EINES NETZWERKS

CONCEPTION D'UN RÉSEAU

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.09.2007 US 975831 P**

(43) Date of publication of application:
**02.06.2010 Bulletin 2010/22**

(73) Proprietor: **Telefonaktiebolaget L M Ericsson (PUBL)**
**16483 Stockholm (SE)**

(72) Inventors:
• **CAVIGLIA, Diego**
**I-17100 Savona (IT)**

• **BOTTARI, Giulio**
**I-57123 Livorno (IT)**

(74) Representative: **Stasiewski, Piotr Grzegorz**
**Ericsson Limited**
**Patent Unit Optical Networks**
**Unit 4 Midleton Gate**
**Guildford Business Park**
**Guildford,**
**Surrey GU2 8SG (GB)**

(56) References cited:
**DE-A1-102004 057 496    US-B1- 6 768 718**
**US-B1- 6 873 600**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

This invention relates to a method of designing a network.

**BACKGROUND**

Capacity planning - determining the necessary amount of resources to satisfy a certain traffic matrix given the network topology and the required traffic survivability - is one of the most challenging tasks a network architect is required to perform. A traffic matrix contains a plurality of entries each describing the number of circuits to be created between a source and a destination or set of destinations. The capacity planning may also contain any of the following inputs:

- the required protection/restoration scheme, e.g. 1+1 protected, Fast ReRoute (FRR), On The Fly (the protection circuit is calculated and implemented at failure time), SNCP; (Subnetwork Connection Protection; basically, path 1+1).
- the required diversity between worker and protection/restoration circuit (link, node or SRLG - shared risk link groups);
- resources (link, node or SRLG) to be included or excluded during the route computation for the circuits;
- traffic parameters for the circuit(s) e.g. the bandwidth, CoS (class of service);
- the physical topology of the network, that is, the connectivity relationship among the network elements;
- the required network survivability, that is, the number and type of the failure(s) the network must survive (e.g. double links failure, single SRLG failure, ...) and the order of application of failures (deterministic or stochastic);
- an ordered list of network interface to be used during the capacity planning process;, such that a user can select a priori, that is, before the simulation runs, which kind of network interfaces (e.g. which capacity, STM64, STM16, 10Gb, 100Mb, etc) must be used or not used during the capacity planning process.

The outcome of the capacity planning process is the number and type of the needed resources. The resulting network can be saved as inventory report and used to purchase the required material.
The main technical and theoretical problem with the capacity planning is due to the fact that the final result is dependent on:

- The sequence the traffic matrix is applied, that is, the order the circuits are created in the network

- The order the failures are applied in the network

Given the above, the only way to be sure that the capacity planning results are valid for each sequence of both circuit creation and failures is to run the simulation for each possible case that is a NP complex problem. It easy to see that given a traffic matrix with N entries there are N! possible sequences of applying it.
An already available planning tool (ON-Planner) performs capacity planning with a heuristic algorithm.
Each Capacity Planning instance allocates automatically enough resources in order to satisfy increasing traffic (given by a Traffic Matrix) and/or to survive to a specified combination of faults assuming a certain order of circuit creation and performing a certain number of procedure steps.
An Automatic Optimization process has been introduced to launch several instances of Capacity Planning aiming at the stability of the network resources. The process ends when an optimal and stable solution is obtained.
This Automatic Optimization is meaningful only if:

- The Traffic Matrix is applied in random order and/or
- The fault sequence generation is random

The Automatic Optimization is stopped when a set of consecutive Capacity Planning instances (i.e. 3 consecutive iterations) brings to the same result in terms of network upgrades.
At the time being, the automatic optimization works as follow:

- An ideal scenario is considered (no faults are simulated in the network). Traffic matrix is applied several times by adding required ports and removing the unused ones until no more ports are added or removed for 3 consecutive iterations.
- On the network optimized for the ideal scenario, carrying the traffic updated by the traffic matrix, a set of faults (on Link, SRLG, NE...) is produced and ports are added or removed to support the new traffic in presence of faults. The automatic optimization is stopped when no more ports are added or removed for 3 consecutive iterations.

There are known documents related to configuration of communications networks, namely DE102004057496A1 and US6768718B1. However, operations as in the invention now to be described are neither disclosed nor suggested in the prior art document.

## SUMMARY

According to a first aspect of the invention, there is provided a method of designing a network given a set of network nodes, a set of adjacencies defining which nodes can be connected together directly and so are topologically adjacent and a traffic matrix comprising a plurality of entries each indicating a source node, a destination node and a number being the number of connections from the source node to the destination node that are to be present in the network; the method comprising the steps of:

> a) simulating the network nodes and the adjacencies thereof to generate a simulated network;
> b) simulating applying the traffic matrix entry by entry, each application of an entry causing a number of links consistent with the entry to be simulated between the source and destination nodes indicated in the entry, via a chain of topologically adjacent nodes;
> c) simulating the effect of at least one failure on the simulated network, including simulating the re-routing of the links onto a replacement chain where the chain is broken;
> d) determining the number of links between each pair of topologically adjacent nodes;
> e) repeating steps (a) to (d) for a plurality of iterations, the order in which the entries in the traffic matrix and the faults are applied being different in different iterations;
> f) for each iteration and for each topologically adjacent pair of nodes, determining an average number of links between the pair of nodes for all iterations so far;
> g) for each iteration and for each pair of topologically adjacent pair of nodes, determining a variance in the average number of links for all iterations so far;
> h) for each iteration, determining an average variance in the average number of links for all iterations so far, the average being taken across the entire network;
> i) for each iteration, determining a variance in the variances in the average number of links for all iterations so far, the variance being taken across the entire network; and
> j) determining when to cease iterating based upon the variance in the variances in the average number of links.

By using the variance in the variance of the average number of links between the nodes, it can be determined when a sufficient number of iterations have been performed rather than simply requiring a fixed number. This reduces the need to calculate all the possible combinations of the order in which the traffic matrix and the faults are applied.

Preferably, the method comprises the step of storing and/or outputting, as a number of links to be provided between each topologically adjacent pair of nodes, the average number of links for that pair of nodes. The storing may be in a memory, hard disc or any other storage medium of a computer, which may be used to carry out the method. The outputting may be on a screen, printed out, or as a data file or any other suitable method.

The method may further comprise implementing the network in line with the number of links to be provided between each topologically adjacent pair of nodes.

Step (j) of the method may comprise determining whether the variance in the variances in the average number of links is below a threshold. Alternatively, it may comprise determining whether the variance in the variances in the average number of links has converged to within a predetermined margin of error. The Tchebycheff inequality can be used as criterion to stop the simulation. Tchebycheff inequality assures that

> o At least 75% of the values are included in $\mu-2\sigma$ and $\mu+2\sigma$
>
> o At least 88% of the values are included in $\mu-3\sigma$ e $\mu+3\sigma$
>
> o At least 93% of the values are included in $\mu-4\sigma$ e $\mu+4\sigma$

where $\mu$ is the average and $\sigma$ is the variance.

The entries in the traffic matrix may also each comprise an indication of the protection desired for the link. This may comprise at least one of the following:

- 1:1 protection, where a backup channel is provided for every link
- 1:N protection, where a backup channel is provided for every N links
- Fast ReRoute (FRR), where every link in a chain is protected by a backup path that commences from the first node in the link that can be activated should that link fail
- On the fly, where the protection circuit is calculated and implemented at failure time
- Shared risk link group, where any protection circuit cannot be carried over a physical link that is likely to fail at the same time as the link itself (for example, being on the same optical fiber)
- Link or node diversity; link diversity means that protection path and failed one do not share any links while node diversity requires that no node is shared.

Step (b) may comprise simulating both the link and the protection desired. Step (c) may comprise simulating rerouting of a failed link based on the protection applied to the link in line with the protection desired.

The set of adjacencies may include data relating to the physical connections between the nodes; for example, data may be included that indicates that a given physical connection is carried over the same conduit (fiber, cable, etc) as another physical connection.

The entries in the traffic matrix may comprise an indication of the bandwidth to be carried by the links. The entries may also comprise an indication of the Class or Quality of Service (CoS / QoS) to be carried by the link.

The network may be a synchronous network, such as SDH (synchronous digital hierarchy) or SONET (synchronous optical networking) networks. Alternative networks include photonic, G.709, T-MPLS, PBB-TE, MPLS.

The average may be the mean.

The method may be implemented as a computer program, running on an appropriate computer.

## BRIEF DESCRIPTION OF THE DRAWINGS

**Figure 1** shows a flowchart showing the operation of an embodiment of the invention;

**Figure 2** shows an example network to which the method illustrated in Figure 1 can be applied; and

**Figures 3 and 4** shows a graph of the average variance in the number of links and the variance in the average variance in the number of links respectively in an example application of the method of Figure 1 to the network of Figure 2.

## DETAILED DESCRIPTION

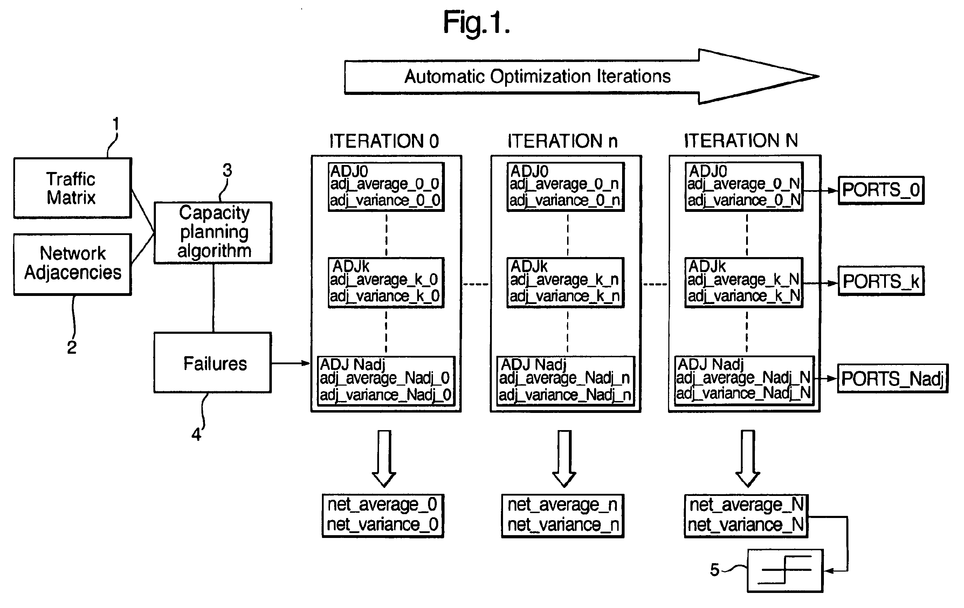

The set of steps shown with respect to Figure 1 defines the heuristic algorithm to be used to perform the capacity planning according to a first embodiment of a method according to the present invention. In this embodiment, a number of iterations of a capacity planning algorithm 3 are carried out. This can be any commonly used algorithm, such as that employed in the software product "ON-Planner".

The algorithm takes as an input a traffic matrix 1 and a description of the topological adjacencies of the nodes 2 (that is, which nodes are physically linked to which other nodes). Each entry in the traffic matrix comprises a source and one or more destination nodes for a particular desired link, together with other such data as the capacity planning algorithm may require, such as the bandwidth desired for the link, the protection required for the link and so on.

At each iteration, the capacity planning algorithm 3 applies the entries in the traffic matrix in a random order, so that the arrangement of the circuits set up by the algorithm may differ from iteration to iteration. The output of the capacity planning algorithm is a number of circuits to be provided between each pairing of topologically adjacent nodes. There are considered to be no bandwidth constraints during the capacity planning simulation; that is, circuits are routed counting that there are infinite resources in the network.

The next stage within each iteration is to apply a randomly ordered series of network failures (the order changing at each iteration), and to simulate the effect that these would have on the network's protection mechanisms, the rerouting of circuits and so on. A suitable algorithm for this is known from the software product "ON-Planner". Circuits rerouted are added to the number of circuits between each pairing of topologically adjacent network nodes.

Thus, at each iteration, for each pairing of topologically adjacent nodes, a number of circuits will be indicated.

For the first iteration, Iteration 0 in Figure 1, for each topologically adjacent pair of nodes or "adjacency" (adj k) the number of circuits is stored in adj_circui_k_0, including the addition of the circuits that were rerouted because of the simulation of failures.

For this initial iteration, the average (in this embodiment the mean is employed as the average) number of circuits for each adjacency will be equal to the actual number of circuits for that adjacency - taking the mean of a single number is a mathematical identity. The variance of number of circuits for each adjacency will be zero, as will the average variance of number of circuits over the whole network and the variance in the variances for each adjacency.

The simulation of the network is then cleaned; all the circuits are deleted and all the failure(s) are removed.

For the next and each succeeding iteration, the method operates in the same manner, applying the traffic matrix and failures so as to arrive at a number of circuits for each adjacency stored in adj_circuit_k_n, where n is the number of the iteration.

At the end of Iteration n, the following data are calculated as follows:

- for each adjacency k the average number of connections over that adjacency for all iterations so far:

$$adj\_average\_k\_n = \frac{\sum_{j=0}^{n} adj\_circuit\_k\_j}{n}$$

- for each adjacency k the variance in the number of circuits on that adjacency for all iterations so far:

$$adj\_variance\_k\_n = \frac{1}{n} \cdot \left( \sum_{i=0}^{n} (adj\_circuit\_k\_i - adj\_average\_k\_n)^2 \right)$$

- for the network as a whole, the average variance (where Nadj is the total number of adjacencies):

$$net\_average\_n = \frac{\sum_{k=1}^{Nadj} adj\_variance\_k\_n}{Nadj}$$

- for the network as a whole, the variance in the individual variances:

$$net\_variance\_n = \frac{\sum_{k=1}^{Nadj} (adj\_variance\_k\_n - adj\_average\_n)^2}{Nadj}$$

The iterations continue until a criterion 5 is met; at the end of each iteration the simulation is cleaned as described above and the method carried out once more. The criterion is based upon the variance in the individual variances net_variance_n. When net_variance_n falls below a threshold or converges to within a certain limit, the iterations cease; in the Figures this is depicted as iteration N.

For each adjacency the adj_average_k_N is converted into port information given the policy requested by the operator. As example if adj_average_N is 60 and the technology is SDH then a STM64 port is allocated for that adjacency, because STM64 can host 60 VC4 circuits using a single fiber.

In order to determine the Threshold the Chebyshev inequality assures that:

- at least the 75% of the values of net_average_i where i indicates a possible sequence of failures are contained in the interval:

$$[net\_average\_n - 2 \cdot net\_variance\_n; net\_average\_n + 2 \cdot net\_variance\_n]$$

- at least the 88% of the values will be between:

$$[net\_average\_n - 3 \cdot net\_variance\_n; net\_average\_n + 3 \cdot net\_variance\_n]$$

- at least the 93% of the values will be between:

$$[net\_average\_n - 4 \cdot net\_variance\_n; net\_average\_n + 4 \cdot net\_variance\_n]$$

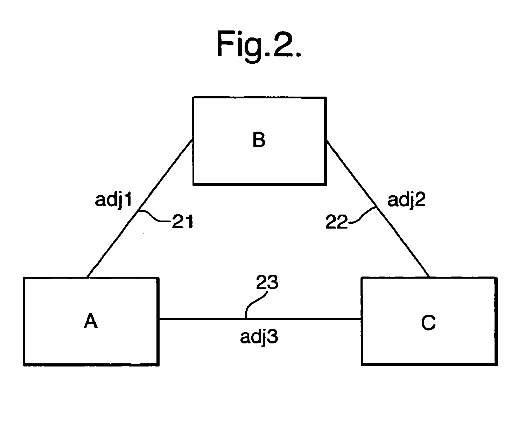

An example network on which the method according to the embodiment of the invention described above can be seen in Figure 2 of the accompanying drawings. As will be apparent, this is a very simple network comprising three nodes A, B, C. All of the nodes are connected together, so that three are three adjacencies - adj1 21 between A and B, adj2 22 between B and C and adj3 23 between C and A. A total of 27 circuits are to be provided over the network.

The outputs of the capacity planning iterations are shown in Appendix A. For each of the 200 iterations, the number of circuits indicated by the capacity planning algorithm 3 after the faults 4 have been applied is shown in the columns adj1, adj2 and adj3. As can be seen in the Total Circuits column, these add up to 27.

For each adjacency and each iteration, the average number of circuits over that adjacency for all iterations up to the current one is displayed in the columns adj_average_1_n, adj_average_2_n and adj_average_3_n respectively. The corresponding variances in the number of circuits over each adjacency is displayed in adj_variance_1_n, adj_variance_2_n and adj_variance_3_n respectively. The average variance over all adjacencies is shown in net_average_n and the variance of the variances adj_variance_1_n, adj_variance_2_n and adj_variance_3_n is shown at net_variance_n.

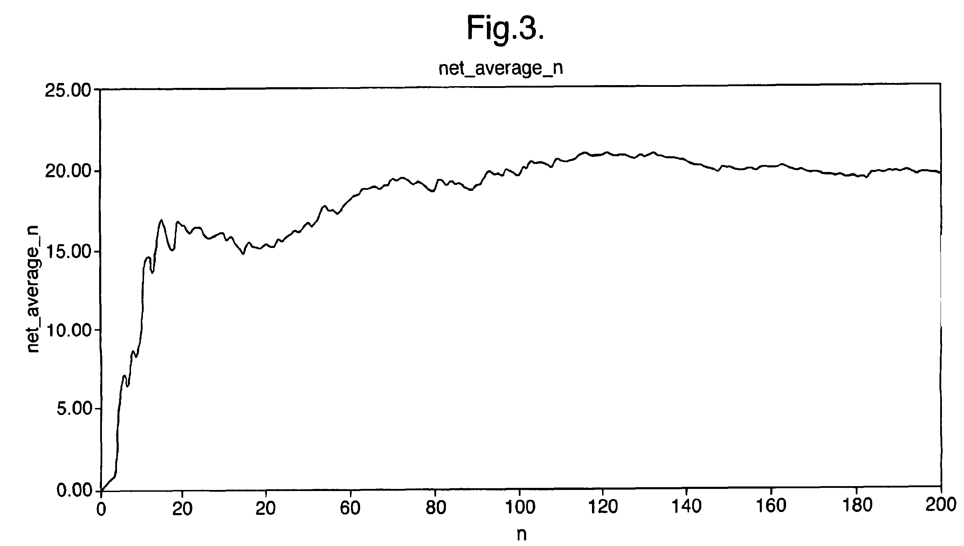

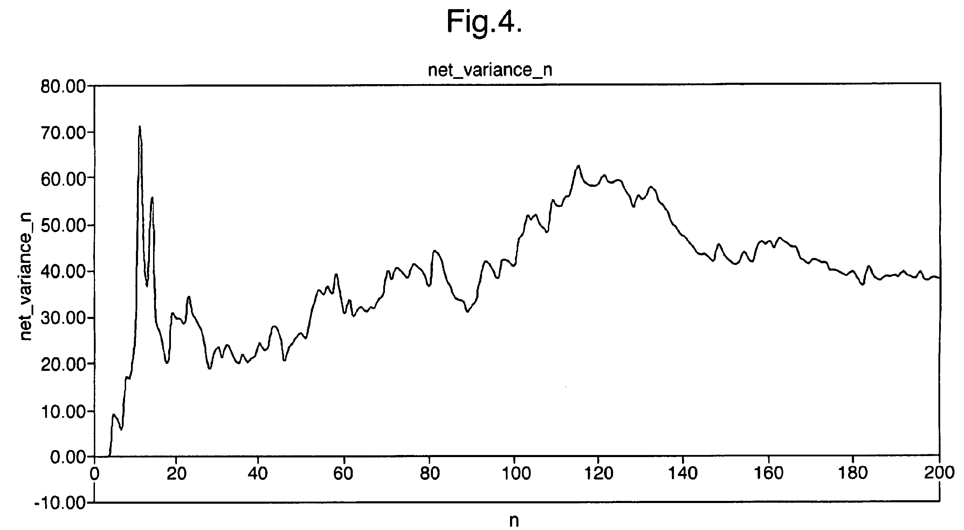

The results are shown graphically in Figures 3 and 4 of the accompanying drawings. Figure 3 shows how the average variance changes as the number of iterations progresses. As can be seen, this converges to a value of about 30. In Figure 4, the evolution of the variance in the individual variances is depicted; this converges at about 38. Once this convergence is complete, the iterations are stopped and the final average number of links adj_average_1_n (7.50), adj_average_2_n (7.35) and adj_average_3_n (12.16) for each adjacency are used to determine the number of circuits to apply to the network.

3 Adjacency
27 Circuits
200 Instances of Capacity Planning

| CP Instances n | Adj1 | Adj2 | Adj3 | Tot Circuits | adj_average_1_n | adj_average_2_n | adj_average_3_n | adj_variance_1_n | adj_variance_2_n | adj_variance_3_n | net_average_n | net_variance_n |
|---|---|---|---|---|---|---|---|---|---|---|---|---|
| 1 | 10 | 5 | 12 | 27 | 10.00 | 5.00 | 12.00 | 0.00 | 0.00 | 0.00 | 0.00 | 0.00 |
| 2 | 8 | 7 | 12 | 27 | 9.00 | 6.00 | 12.00 | 0.50 | 0.50 | 0.00 | 0.33 | 0.06 |
| 3 | 11 | 4 | 12 | 27 | 9.67 | 5.33 | 12.00 | 0.93 | 0.93 | 0.00 | 0.62 | 0.19 |
| 4 | 9 | 8 | 10 | 27 | 9.50 | 6.00 | 11.50 | 0.76 | 1.69 | 0.56 | 1.00 | 0.24 |
| 5 | 5 | 2 | 20 | 27 | 8.60 | 5.20 | 13.20 | 3.20 | 3.40 | 9.70 | 5.43 | 9.10 |
| 6 | 6 | 12 | 9 | 27 | 8.17 | 6.33 | 12.50 | 3.45 | 8.19 | 10.12 | 7.25 | 7.87 |
| 7 | 10 | 7 | 10 | 27 | 8.43 | 6.43 | 12.14 | 3.31 | 7.07 | 9.33 | 6.57 | 6.17 |
| 8 | 5 | 2 | 20 | 27 | 8.00 | 5.88 | 13.13 | 4.02 | 8.06 | 14.07 | 8.72 | 17.07 |
| 9 | 6 | 4 | 17 | 27 | 7.78 | 5.67 | 13.56 | 3.92 | 7.47 | 13.83 | 8.41 | 16.79 |
| 10 | 8 | 12 | 7 | 27 | 7.80 | 6.30 | 12.90 | 3.54 | 9.97 | 15.93 | 9.81 | 25.61 |
| 11 | 12 | 14 | 1 | 27 | 8.18 | 7.00 | 11.82 | 4.54 | 13.52 | 25.12 | 14.39 | 70.97 |
| 12 | 15 | 3 | 9 | 27 | 8.75 | 6.67 | 11.58 | 7.42 | 13.52 | 23.58 | 14.84 | 44.43 |
| 13 | 7 | 8 | 12 | 27 | 8.62 | 6.77 | 11.62 | 7.05 | 12.59 | 21.78 | 13.81 | 38.91 |
| 14 | 8 | 16 | 3 | 27 | 8.57 | 7.43 | 11.00 | 6.57 | 16.94 | 24.79 | 18.10 | 55.73 |
| 15 | 17 | 2 | 8 | 27 | 9.13 | 7.07 | 10.80 | 10.25 | 17.52 | 23.66 | 17.15 | 30.04 |
| 16 | 12 | 7 | 8 | 27 | 9.31 | 7.06 | 10.63 | 10.06 | 16.43 | 22.62 | 16.37 | 26.26 |
| 17 | 11 | 6 | 10 | 27 | 9.41 | 7.00 | 10.59 | 9.82 | 15.52 | 21.31 | 15.46 | 22.76 |
| 18 | 12 | 2 | 13 | 27 | 9.56 | 6.72 | 10.72 | 9.42 | 15.90 | 20.41 | 15.24 | 20.35 |
| 19 | 3 | 3 | 21 | 27 | 9.21 | 6.53 | 11.26 | 10.95 | 15.71 | 24.33 | 17.00 | 30.63 |
| 20 | 5 | 6 | 16 | 27 | 9.00 | 6.50 | 11.50 | 11.21 | 14.94 | 24.12 | 16.76 | 29.46 |
| 21 | 8 | 12 | 7 | 27 | 8.95 | 6.76 | 11.29 | 10.71 | 15.54 | 23.85 | 16.70 | 29.42 |
| 22 | 9 | 10 | 8 | 27 | 8.95 | 6.91 | 11.14 | 10.23 | 15.26 | 23.21 | 16.23 | 28.57 |
| 23 | 11 | 12 | 4 | 27 | 9.04 | 7.13 | 10.83 | 9.95 | 15.63 | 24.23 | 16.60 | 34.45 |
| 24 | 15 | 6 | 6 | 27 | 9.29 | 7.08 | 10.63 | 10.89 | 15.03 | 24.11 | 16.68 | 30.47 |
| 25 | 14 | 7 | 6 | 27 | 9.48 | 7.08 | 10.44 | 11.27 | 14.43 | 23.93 | 16.55 | 28.95 |
| 26 | 12 | 7 | 8 | 27 | 9.58 | 7.08 | 10.35 | 11.07 | 13.87 | 23.23 | 16.06 | 27.02 |
| 27 | 4 | 9 | 14 | 27 | 9.37 | 7.15 | 10.48 | 11.72 | 13.49 | 22.82 | 16.01 | 23.72 |
| 28 | 3 | 11 | 13 | 27 | 9.14 | 7.29 | 10.57 | 12.65 | 13.50 | 22.22 | 16.12 | 18.70 |
| 29 | 8 | 4 | 17 | 27 | 9.03 | 7.17 | 10.79 | 12.53 | 13.38 | 22.78 | 16.23 | 21.57 |
| 30 | 10 | 12 | 5 | 27 | 9.07 | 7.33 | 10.60 | 12.15 | 13.66 | 23.07 | 16.29 | 23.34 |
| 31 | 11 | 5 | 11 | 27 | 9.13 | 7.26 | 10.61 | 11.87 | 13.38 | 22.33 | 15.86 | 21.30 |
| 32 | 8 | 2 | 17 | 27 | 9.09 | 7.09 | 10.81 | 11.53 | 13.78 | 22.83 | 16.05 | 23.83 |
| 33 | 9 | 9 | 9 | 27 | 9.09 | 7.15 | 10.76 | 11.18 | 13.46 | 22.23 | 15.63 | 22.67 |
| 34 | 12 | 6 | 9 | 27 | 9.18 | 7.12 | 10.71 | 11.09 | 13.10 | 21.66 | 15.28 | 21.00 |
| 35 | 10 | 4 | 13 | 27 | 9.20 | 7.03 | 10.77 | 10.79 | 12.99 | 21.18 | 14.99 | 19.99 |
| 36 | 1 | 7 | 19 | 27 | 8.97 | 7.03 | 11.00 | 12.26 | 12.63 | 22.37 | 15.75 | 21.93 |
| 37 | 7 | 10 | 10 | 27 | 8.92 | 7.11 | 10.97 | 12.03 | 12.51 | 21.79 | 15.44 | 20.20 |
| 38 | 8 | 3 | 16 | 27 | 8.89 | 7.00 | 11.11 | 11.73 | 12.61 | 21.85 | 15.40 | 20.96 |
| 39 | 12 | 9 | 6 | 27 | 8.97 | 7.05 | 10.97 | 11.66 | 12.38 | 21.92 | 15.32 | 21.88 |
| 40 | 8 | 1 | 18 | 27 | 8.95 | 6.90 | 11.15 | 11.39 | 12.94 | 22.55 | 15.63 | 24.35 |
| 41 | 7 | 11 | 9 | 27 | 8.90 | 7.00 | 11.10 | 11.21 | 13.02 | 22.11 | 15.44 | 22.75 |
| 42 | 5 | 6 | 16 | 27 | 8.81 | 6.98 | 11.21 | 11.28 | 12.73 | 22.13 | 15.38 | 23.11 |
| 43 | 3 | 4 | 20 | 27 | 8.67 | 6.91 | 11.42 | 11.77 | 12.63 | 23.32 | 15.91 | 27.62 |
| 44 | 12 | 8 | 7 | 27 | 8.75 | 6.93 | 11.32 | 11.74 | 12.37 | 23.22 | 15.78 | 27.75 |
| 45 | 1 | 10 | 16 | 27 | 8.58 | 7.00 | 11.42 | 12.76 | 12.29 | 23.17 | 16.07 | 25.20 |
| 46 | 15 | 1 | 11 | 27 | 8.72 | 6.67 | 11.41 | 13.34 | 12.77 | 22.67 | 16.26 | 20.58 |
| 47 | 13 | 10 | 4 | 27 | 8.81 | 6.94 | 11.28 | 13.43 | 12.70 | 23.31 | 16.48 | 23.39 |

EP 2 191 611 B1

Appendix A

| CP Instances n | Adj1 | Adj2 | Adj3 | Tot Circuits | adj_average_1_n | adj_average_2_n | adj_average_3_n | adj_variance_1_n | adj_variance_2_n | adj_variance_3_n | net_average_n | net_variance_n |
|---|---|---|---|---|---|---|---|---|---|---|---|---|
| 48 | 12 | 9 | 6 | 27 | 8.88 | 6.98 | 11.15 | 13.35 | 12.52 | 23.37 | 16.42 | 24.31 |
| 49 | 8 | 1 | 18 | 27 | 8.86 | 6.86 | 11.29 | 13.09 | 12.97 | 23.81 | 16.63 | 25.84 |
| 50 | 1 | 8 | 18 | 27 | 8.70 | 6.88 | 11.42 | 14.02 | 12.73 | 24.20 | 16.99 | 26.33 |
| 51 | 7 | 7 | 13 | 27 | 8.67 | 6.88 | 11.45 | 13.80 | 12.48 | 23.78 | 16.69 | 25.42 |
| 52 | 3 | 4 | 20 | 27 | 8.56 | 6.83 | 11.62 | 14.13 | 12.40 | 24.67 | 17.07 | 29.42 |
| 53 | 11 | 14 | 2 | 27 | 8.60 | 6.95 | 11.43 | 13.97 | 13.10 | 25.89 | 17.65 | 34.03 |
| 54 | 1 | 7 | 19 | 27 | 8.46 | 6.96 | 11.57 | 14.74 | 12.86 | 26.43 | 18.01 | 36.03 |
| 55 | 8 | 6 | 13 | 27 | 8.45 | 6.95 | 11.60 | 14.48 | 12.64 | 25.98 | 17.70 | 34.87 |
| 56 | 5 | 4 | 18 | 27 | 8.39 | 6.89 | 11.71 | 14.42 | 12.56 | 26.22 | 17.74 | 36.59 |
| 57 | 6 | 8 | 13 | 27 | 8.35 | 6.91 | 11.74 | 14.27 | 12.38 | 25.79 | 17.47 | 35.20 |
| 58 | 14 | 10 | 3 | 27 | 8.45 | 6.97 | 11.59 | 14.55 | 12.31 | 26.62 | 17.83 | 39.49 |
| 59 | 0 | 13 | 14 | 27 | 8.31 | 7.07 | 11.63 | 15.48 | 12.70 | 26.26 | 18.14 | 34.24 |
| 60 | 0 | 12 | 15 | 27 | 8.17 | 7.15 | 11.68 | 16.33 | 12.88 | 26.01 | 18.40 | 30.89 |
| 61 | 5 | 2 | 20 | 27 | 8.11 | 7.07 | 11.82 | 16.22 | 13.09 | 26.68 | 18.66 | 33.77 |
| 62 | 4 | 14 | 9 | 27 | 8.05 | 7.18 | 11.77 | 16.22 | 13.63 | 26.37 | 18.74 | 30.25 |
| 63 | 0 | 8 | 19 | 27 | 7.92 | 7.19 | 11.89 | 16.96 | 13.42 | 26.76 | 19.05 | 31.62 |
| 64 | 7 | 2 | 18 | 27 | 7.91 | 7.11 | 11.98 | 16.71 | 13.62 | 26.90 | 19.08 | 32.22 |
| 65 | 1 | 10 | 16 | 27 | 7.80 | 7.15 | 12.05 | 17.16 | 13.53 | 26.73 | 19.14 | 30.99 |
| 66 | 13 | 8 | 6 | 27 | 7.88 | 7.17 | 11.95 | 17.30 | 13.34 | 26.86 | 19.17 | 32.22 |
| 67 | 13 | 6 | 8 | 27 | 7.98 | 7.15 | 11.90 | 17.42 | 13.16 | 26.69 | 19.09 | 31.90 |
| 68 | 1 | 7 | 19 | 27 | 7.85 | 7.15 | 12.00 | 17.86 | 12.97 | 27.02 | 19.28 | 33.91 |
| 69 | 5 | 4 | 18 | 27 | 7.81 | 7.10 | 12.09 | 17.71 | 12.92 | 27.13 | 19.25 | 34.86 |
| 70 | 1 | 4 | 22 | 27 | 7.71 | 7.06 | 12.23 | 18.10 | 12.87 | 28.11 | 19.69 | 39.98 |
| 71 | 3 | 10 | 14 | 27 | 7.65 | 7.10 | 12.25 | 18.15 | 12.80 | 27.75 | 19.57 | 38.26 |
| 72 | 11 | 12 | 4 | 27 | 7.69 | 7.17 | 12.14 | 18.05 | 12.95 | 28.29 | 19.76 | 40.68 |
| 73 | 13 | 6 | 8 | 27 | 7.77 | 7.15 | 12.08 | 18.18 | 12.79 | 28.13 | 19.70 | 40.37 |
| 74 | 7 | 11 | 9 | 27 | 7.76 | 7.20 | 12.04 | 17.94 | 12.81 | 27.88 | 19.54 | 39.09 |
| 75 | 10 | 8 | 9 | 27 | 7.79 | 7.21 | 12.00 | 17.77 | 12.65 | 27.62 | 19.35 | 38.61 |
| 76 | 13 | 10 | 4 | 27 | 7.88 | 7.25 | 11.89 | 17.88 | 12.58 | 28.08 | 19.52 | 41.38 |
| 77 | 10 | 9 | 8 | 27 | 7.88 | 7.27 | 11.84 | 17.71 | 12.46 | 27.91 | 19.36 | 41.14 |
| 78 | 8 | 10 | 9 | 27 | 7.88 | 7.31 | 11.81 | 17.48 | 12.39 | 27.65 | 19.18 | 40.24 |
| 79 | 6 | 10 | 11 | 27 | 7.86 | 7.34 | 11.80 | 17.31 | 12.32 | 27.31 | 18.98 | 38.82 |
| 80 | 10 | 1 | 16 | 27 | 7.89 | 7.28 | 11.85 | 17.14 | 12.66 | 27.18 | 19.00 | 38.86 |
| 81 | 0 | 3 | 24 | 27 | 7.79 | 7.21 | 12.00 | 17.68 | 12.72 | 28.62 | 19.68 | 44.13 |
| 82 | 6 | 6 | 15 | 27 | 7.77 | 7.20 | 12.04 | 17.50 | 12.59 | 28.38 | 19.49 | 43.56 |
| 83 | 11 | 5 | 11 | 27 | 7.81 | 7.17 | 12.02 | 17.42 | 12.49 | 28.05 | 19.32 | 42.18 |
| 84 | 0 | 14 | 13 | 27 | 7.71 | 7.25 | 12.04 | 17.92 | 12.88 | 27.73 | 19.51 | 38.00 |
| 85 | 6 | 10 | 11 | 27 | 7.69 | 7.28 | 12.02 | 17.74 | 12.82 | 27.42 | 19.33 | 36.77 |
| 86 | 4 | 14 | 9 | 27 | 7.65 | 7.36 | 11.99 | 17.69 | 13.18 | 27.20 | 19.36 | 34.14 |
| 87 | 4 | 8 | 15 | 27 | 7.61 | 7.37 | 12.02 | 17.64 | 13.04 | 26.99 | 19.22 | 33.71 |
| 88 | 9 | 9 | 9 | 27 | 7.63 | 7.39 | 11.99 | 17.46 | 12.92 | 26.79 | 19.05 | 33.33 |
| 89 | 12 | 2 | 13 | 27 | 7.67 | 7.33 | 12.00 | 17.47 | 13.09 | 26.50 | 19.02 | 31.15 |
| 90 | 6 | 0 | 21 | 27 | 7.66 | 7.24 | 12.10 | 17.31 | 13.53 | 27.08 | 19.31 | 32.61 |
| 91 | 5 | 3 | 19 | 27 | 7.63 | 7.20 | 12.18 | 17.19 | 13.57 | 27.30 | 19.35 | 33.72 |
| 92 | 13 | 14 | 0 | 27 | 7.68 | 7.27 | 12.04 | 17.31 | 13.92 | 28.58 | 19.94 | 39.24 |
| 93 | 12 | 12 | 3 | 27 | 7.73 | 7.32 | 11.95 | 17.32 | 14.00 | 29.13 | 20.15 | 42.13 |
| 94 | 5 | 8 | 14 | 27 | 7.70 | 7.33 | 11.97 | 17.22 | 13.86 | 28.86 | 19.98 | 41.33 |
| 95 | 6 | 14 | 7 | 27 | 7.68 | 7.40 | 11.92 | 17.06 | 14.17 | 28.81 | 20.02 | 40.08 |
| 96 | 12 | 4 | 11 | 27 | 7.73 | 7.36 | 11.91 | 17.08 | 14.14 | 28.52 | 19.91 | 38.48 |
| 97 | 0 | 5 | 22 | 27 | 7.65 | 7.34 | 12.01 | 17.50 | 14.05 | 29.26 | 20.27 | 42.35 |
| 98 | 9 | 11 | 7 | 27 | 7.66 | 7.38 | 11.96 | 17.34 | 14.04 | 29.21 | 20.20 | 42.41 |
| 99 | 6 | 9 | 10 | 27 | 7.67 | 7.39 | 11.94 | 17.17 | 13.93 | 28.95 | 20.02 | 41.67 |

EP 2 191 611 B1

| CP Instances | | | | | adj_average_1_n | adj_average_2_n | adj_average_3_n | adj_variance_1_n | adj_variance_2_n | adj_variance_3_n | net_average_n | net_variance_n |
|---|---|---|---|---|---|---|---|---|---|---|---|---|
| n | Adj1 | Adj2 | Adj3 | Tot Circuits | | | | | | | | |
| 100 | 9 | 10 | 8 | 27 | 7.68 | 7.42 | 11.90 | 17.02 | 13.86 | 28.81 | 19.90 | 41.44 |
| 101 | 2 | 1 | 24 | 27 | 7.62 | 7.36 | 12.02 | 17.16 | 14.12 | 29.95 | 20.41 | 47.06 |
| 102 | 12 | 9 | 6 | 27 | 7.67 | 7.37 | 11.98 | 17.18 | 14.01 | 30.01 | 20.40 | 47.85 |
| 103 | 4 | 0 | 23 | 27 | 7.63 | 7.30 | 12.07 | 17.14 | 14.39 | 30.87 | 20.80 | 52.01 |
| 104 | 3 | 9 | 15 | 27 | 7.59 | 7.32 | 12.10 | 17.17 | 14.28 | 30.68 | 20.70 | 50.95 |
| 105 | 4 | 4 | 19 | 27 | 7.55 | 7.29 | 12.16 | 17.13 | 14.24 | 30.81 | 20.73 | 52.22 |
| 106 | 10 | 1 | 16 | 27 | 7.58 | 7.23 | 12.20 | 17.03 | 14.47 | 30.66 | 20.72 | 50.47 |
| 107 | 9 | 4 | 14 | 27 | 7.59 | 7.20 | 12.21 | 16.88 | 14.43 | 30.40 | 20.57 | 49.29 |
| 108 | 9 | 8 | 10 | 27 | 7.60 | 7.20 | 12.19 | 16.75 | 14.31 | 30.16 | 20.41 | 48.60 |
| 109 | 1 | 1 | 25 | 27 | 7.54 | 7.15 | 12.31 | 16.99 | 14.52 | 31.36 | 20.96 | 55.16 |
| 110 | 7 | 10 | 10 | 27 | 7.54 | 7.17 | 12.29 | 16.83 | 14.46 | 31.13 | 20.81 | 54.18 |
| 111 | 8 | 12 | 7 | 27 | 7.54 | 7.22 | 12.24 | 16.68 | 14.54 | 31.09 | 20.77 | 54.03 |
| 112 | 4 | 3 | 20 | 27 | 7.51 | 7.18 | 12.31 | 16.64 | 14.56 | 31.34 | 20.85 | 55.77 |
| 113 | 9 | 12 | 6 | 27 | 7.52 | 7.22 | 12.26 | 16.52 | 14.64 | 31.41 | 20.86 | 56.31 |
| 114 | 4 | 1 | 22 | 27 | 7.49 | 7.17 | 12.34 | 16.48 | 14.84 | 31.95 | 21.09 | 59.45 |
| 115 | 12 | 12 | 3 | 27 | 7.53 | 7.21 | 12.26 | 16.51 | 14.91 | 32.42 | 21.28 | 62.49 |
| 116 | 11 | 0 | 16 | 27 | 7.56 | 7.15 | 12.29 | 16.47 | 15.23 | 32.26 | 21.32 | 60.14 |
| 117 | 5 | 10 | 12 | 27 | 7.54 | 7.17 | 12.29 | 16.38 | 15.18 | 31.99 | 21.18 | 58.67 |
| 118 | 7 | 13 | 7 | 27 | 7.63 | 7.22 | 12.25 | 16.25 | 15.32 | 31.95 | 21.17 | 58.22 |
| 119 | 7 | 2 | 18 | 27 | 7.53 | 7.18 | 12.29 | 16.11 | 15.41 | 31.95 | 21.16 | 58.33 |
| 120 | 7 | 1 | 19 | 27 | 7.53 | 7.13 | 12.35 | 15.98 | 15.60 | 32.06 | 21.21 | 58.83 |
| 121 | 9 | 14 | 4 | 27 | 7.54 | 7.18 | 12.28 | 15.87 | 15.85 | 32.36 | 21.36 | 60.49 |
| 122 | 5 | 10 | 12 | 27 | 7.52 | 7.20 | 12.28 | 15.79 | 15.79 | 32.09 | 21.22 | 59.08 |
| 123 | 10 | 9 | 8 | 27 | 7.54 | 7.22 | 12.24 | 15.71 | 15.69 | 31.98 | 21.12 | 58.91 |
| 124 | 1 | 7 | 19 | 27 | 7.48 | 7.22 | 12.30 | 15.82 | 15.56 | 32.08 | 21.19 | 59.38 |
| 125 | 8 | 1 | 18 | 27 | 7.49 | 7.17 | 12.34 | 15.80 | 15.74 | 32.08 | 21.21 | 59.15 |
| 126 | 4 | 12 | 11 | 27 | 7.46 | 7.21 | 12.33 | 15.77 | 15.80 | 31.84 | 21.14 | 57.32 |
| 127 | 12 | 5 | 10 | 27 | 7.50 | 7.19 | 12.31 | 15.80 | 15.71 | 31.63 | 21.05 | 56.03 |
| 128 | 13 | 2 | 12 | 27 | 7.54 | 7.15 | 12.31 | 15.91 | 15.79 | 31.39 | 21.03 | 53.63 |
| 129 | 12 | 12 | 3 | 27 | 7.57 | 7.19 | 12.24 | 15.94 | 15.85 | 31.81 | 21.20 | 56.25 |
| 130 | 6 | 11 | 10 | 27 | 7.56 | 7.22 | 12.22 | 15.84 | 15.84 | 31.60 | 21.09 | 55.21 |
| 131 | 7 | 0 | 20 | 27 | 7.56 | 7.16 | 12.28 | 15.72 | 16.11 | 31.81 | 21.21 | 56.20 |
| 132 | 10 | 13 | 4 | 27 | 7.58 | 7.20 | 12.22 | 15.64 | 16.24 | 32.08 | 21.32 | 57.96 |
| 133 | 7 | 7 | 13 | 27 | 7.57 | 7.20 | 12.23 | 15.53 | 16.12 | 31.85 | 21.17 | 57.11 |
| 134 | 13 | 2 | 12 | 27 | 7.61 | 7.16 | 12.22 | 15.63 | 16.20 | 31.61 | 21.15 | 54.80 |
| 135 | 5 | 7 | 15 | 27 | 7.59 | 7.16 | 12.24 | 15.56 | 16.08 | 31.43 | 21.02 | 54.20 |
| 136 | 5 | 13 | 9 | 27 | 7.57 | 7.21 | 12.22 | 15.50 | 16.21 | 31.28 | 20.99 | 52.95 |
| 137 | 1 | 12 | 14 | 27 | 7.53 | 7.24 | 12.23 | 15.69 | 16.26 | 31.07 | 21.01 | 50.70 |
| 138 | 10 | 2 | 15 | 27 | 7.54 | 7.20 | 12.25 | 15.62 | 16.33 | 30.90 | 20.95 | 49.56 |
| 139 | 12 | 4 | 11 | 27 | 7.58 | 7.18 | 12.24 | 15.85 | 16.29 | 30.69 | 20.88 | 48.21 |
| 140 | 7 | 9 | 11 | 27 | 7.57 | 7.19 | 12.24 | 15.54 | 16.20 | 30.48 | 20.74 | 47.52 |
| 141 | 4 | 11 | 12 | 27 | 7.55 | 7.22 | 12.23 | 15.52 | 16.18 | 30.27 | 20.66 | 46.24 |
| 142 | 12 | 5 | 10 | 27 | 7.58 | 7.20 | 12.22 | 15.55 | 16.10 | 30.09 | 20.58 | 45.24 |
| 143 | 13 | 4 | 10 | 27 | 7.62 | 7.18 | 12.20 | 15.64 | 16.06 | 29.91 | 20.54 | 43.95 |
| 144 | 8 | 4 | 15 | 27 | 7.62 | 7.16 | 12.22 | 15.54 | 16.02 | 29.76 | 20.44 | 43.46 |
| 145 | 11 | 9 | 7 | 27 | 7.64 | 7.17 | 12.19 | 15.51 | 15.93 | 29.74 | 20.39 | 43.69 |
| 146 | 4 | 10 | 13 | 27 | 7.62 | 7.19 | 12.19 | 15.49 | 15.88 | 29.54 | 20.30 | 42.68 |
| 147 | 5 | 7 | 15 | 27 | 7.60 | 7.19 | 12.21 | 15.43 | 15.77 | 29.39 | 20.20 | 42.28 |
| 148 | 12 | 14 | 1 | 27 | 7.63 | 7.24 | 12.14 | 15.46 | 15.97 | 30.03 | 20.49 | 45.58 |

Appendix A

| n | Adj1 | Adj2 | Adj3 | Tot Circuits | adj_average_1_n | adj_average_2_n | adj_average_3_n | adj_variance_1_n | adj_variance_2_n | adj_variance_3_n | net_average_n | net_variance_n |
|---|---|---|---|---|---|---|---|---|---|---|---|---|
| 149 | 11 | 2 | 14 | 27 | 7.65 | 7.20 | 12.15 | 15.43 | 16.05 | 29.85 | 20.44 | 44.33 |
| 150 | 3 | 12 | 12 | 27 | 7.62 | 7.23 | 12.15 | 15.47 | 16.09 | 29.65 | 20.40 | 42.83 |
| 151 | 11 | 6 | 10 | 27 | 7.64 | 7.23 | 12.13 | 15.44 | 15.99 | 29.49 | 20.31 | 42.18 |
| 152 | 11 | 5 | 11 | 27 | 7.66 | 7.21 | 12.13 | 15.41 | 15.92 | 29.30 | 20.21 | 41.35 |
| 153 | 6 | 2 | 19 | 27 | 7.65 | 7.18 | 12.17 | 15.33 | 15.99 | 29.41 | 20.24 | 42.11 |
| 154 | 11 | 13 | 3 | 27 | 7.68 | 7.21 | 12.11 | 15.30 | 16.10 | 29.76 | 20.39 | 44.03 |
| 155 | 3 | 11 | 13 | 27 | 7.85 | 7.24 | 12.12 | 15.34 | 16.09 | 29.57 | 20.34 | 42.77 |
| 156 | 9 | 6 | 12 | 27 | 7.65 | 7.23 | 12.12 | 15.25 | 16.00 | 29.38 | 20.21 | 42.15 |
| 157 | 3 | 1 | 20 | 27 | 7.62 | 7.19 | 12.18 | 15.29 | 16.14 | 29.94 | 20.46 | 45.09 |
| 158 | 5 | 2 | 11 | 27 | 7.61 | 7.16 | 12.23 | 15.24 | 16.21 | 30.13 | 20.53 | 46.31 |
| 159 | 8 | 8 | 19 | 27 | 7.61 | 7.18 | 12.27 | 15.14 | 16.11 | 29.95 | 20.40 | 45.77 |
| 160 | 7 | 1 | 10 | 27 | 7.58 | 7.13 | 12.25 | 15.05 | 16.24 | 30.05 | 20.45 | 46.33 |
| 161 | 4 | 13 | 3 | 27 | 7.60 | 7.18 | 12.20 | 15.04 | 16.35 | 29.90 | 20.43 | 45.09 |
| 162 | 11 | 13 | 9 | 27 | 7.60 | 7.20 | 12.18 | 15.02 | 16.46 | 30.23 | 20.57 | 47.03 |
| 163 | 7 | 9 | 12 | 27 | 7.59 | 7.22 | 12.18 | 14.83 | 16.45 | 30.11 | 20.49 | 48.61 |
| 164 | 6 | 4 | 9 | 27 | 7.60 | 7.23 | 12.19 | 14.85 | 16.37 | 29.93 | 20.38 | 45.93 |
| 165 | 9 | 7 | 14 | 27 | 7.62 | 7.21 | 12.17 | 14.77 | 16.33 | 29.76 | 20.29 | 45.29 |
| 166 | 11 | 13 | 15 | 27 | 7.57 | 7.25 | 12.18 | 14.75 | 16.23 | 29.65 | 20.21 | 44.88 |
| 167 | 0 | 4 | 5 | 27 | 7.58 | 7.23 | 12.20 | 15.01 | 16.33 | 29.49 | 20.28 | 42.72 |
| 168 | 8 | 9 | 15 | 27 | 7.55 | 7.24 | 12.21 | 14.82 | 16.30 | 29.36 | 20.19 | 42.33 |
| 169 | 3 | 12 | 11 | 27 | 7.56 | 7.28 | 12.17 | 14.95 | 16.26 | 29.24 | 20.14 | 41.64 |
| 170 | 10 | 7 | 7 | 27 | 7.56 | 7.26 | 12.19 | 14.90 | 16.17 | 29.36 | 20.17 | 42.52 |
| 171 | 6 | 1 | 13 | 27 | 7.57 | 7.26 | 12.18 | 14.63 | 16.08 | 29.07 | 20.08 | 42.24 |
| 172 | 6 | 3 | 17 | 27 | 7.80 | 7.25 | 12.15 | 14.75 | 16.11 | 29.06 | 19.97 | 41.75 |
| 173 | 8 | 9 | 14 | 27 | 7.59 | 7.22 | 12.18 | 14.75 | 16.24 | 28.90 | 19.95 | 41.87 |
| 174 | 13 | 7 | 7 | 27 | 7.56 | 7.23 | 12.18 | 14.67 | 16.25 | 28.86 | 19.96 | 40.26 |
| 175 | 7 | 4 | 19 | 27 | 7.55 | 7.23 | 12.21 | 14.83 | 16.18 | 28.83 | 19.93 | 40.33 |
| 176 | 1 | 6 | 15 | 27 | 7.58 | 7.22 | 12.22 | 14.76 | 16.09 | 28.69 | 19.95 | 39.76 |
| 177 | 8 | 4 | 13 | 27 | 7.56 | 7.21 | 12.19 | 14.91 | 16.01 | 28.68 | 19.85 | 39.37 |
| 178 | 14 | 8 | 11 | 27 | 7.54 | 7.24 | 12.23 | 14.90 | 15.97 | 28.77 | 19.88 | 38.03 |
| 179 | 4 | 13 | -1 | 27 | 7.51 | 7.25 | 12.24 | 14.88 | 15.89 | 28.65 | 19.68 | 39.72 |
| 180 | 4 | 9 | 11 | 27 | 7.51 | 7.29 | 12.25 | 15.04 | 15.98 | 28.50 | 19.81 | 39.29 |
| 181 | 7 | 14 | 10 | 27 | 7.54 | 7.33 | 12.24 | 14.98 | 15.91 | 28.35 | 19.84 | 37.64 |
| 182 | 14 | 14 | 9 | 27 | 7.51 | 7.38 | 12.17 | 15.10 | 16.07 | 29.14 | 19.74 | 37.23 |
| 183 | 2 | 14 | 21 | 27 | 7.48 | 7.38 | 12.16 | 15.18 | 16.23 | 28.99 | 20.11 | 41.00 |
| 184 | 3 | 10 | 8 | 27 | 7.49 | 7.37 | 12.15 | 15.21 | 16.38 | 28.88 | 20.13 | 39.42 |
| 185 | 8 | 6 | 19 | 27 | 7.45 | 7.40 | 12.13 | 15.13 | 16.33 | 28.76 | 20.15 | 38.17 |
| 186 | 0 | 13 | 16 | 27 | 7.44 | 7.39 | 12.18 | 15.35 | 16.25 | 29.02 | 20.07 | 37.97 |
| 187 | 6 | 6 | 4 | 27 | 7.41 | 7.36 | 12.16 | 15.28 | 16.33 | 28.96 | 20.21 | 38.99 |
| 188 | 2 | 2 | 10 | 27 | 7.42 | 7.39 | 12.20 | 15.35 | 16.25 | 29.05 | 20.19 | 38.65 |
| 189 | 9 | 13 | 12 | 27 | 7.43 | 7.38 | 12.22 | 15.28 | 16.32 | 28.97 | 20.22 | 39.14 |
| 190 | 10 | 5 | 9 | 27 | 7.46 | 7.37 | 12.17 | 15.24 | 16.40 | 29.17 | 20.19 | 38.74 |
| 191 | 12 | 6 | 12 | 27 | 7.47 | 7.38 | 12.16 | 15.27 | 16.34 | 29.04 | 20.27 | 39.85 |
| 192 | 9 | 9 | 15 | 27 | 7.47 | 7.36 | 12.16 | 15.20 | 16.27 | 28.89 | 20.22 | 39.15 |
| 193 | 9 | 4 | 15 | 27 | 7.45 | 7.33 | 12.14 | 15.13 | 16.20 | 28.79 | 20.12 | 38.68 |
| 194 | 2 | 4 | 7 | 27 | 7.48 | 7.32 | 12.19 | 15.21 | 16.17 | 29.05 | 20.04 | 38.50 |
| 195 | 14 | 1 |  | 27 | 7.48 | 7.34 | 12.20 | 15.35 | 16.29 | 28.90 | 20.14 | 39.80 |
| 196 | 7 | 5 |  | 27 | 7.49 | 7.33 | 12.17 | 15.27 | 16.24 | 28.79 | 20.18 | 38.15 |
| 197 | 11 | 11 |  | 27 | 7.49 | 7.35 | 12.18 | 15.25 | 16.22 | 28.90 | 20.10 | 37.92 |
| 198 | 6 | 6 |  | 27 | 7.50 | | 12.16 | 15.19 | 16.15 | 28.80 | 20.13 | 38.67 |
| 199 | 10 | 10 |  | 27 | | | | 15.14 | 16.11 | 28.79 | 20.05 | 38.46 |
| 200 | | | | 27 | | | | | | | 20.01 | 38.68 |

**Claims**

1. A method of designing a network given a set of network nodes (A, B, C), a set of adjacencies (2) defining which nodes can be connected together directly and so are topologically adjacent and a traffic matrix (1) comprising a plurality of entries each indicating a source node, a destination node and a number being the number of connections from the source node to the destination node that are to be present in the network;
the method comprising the steps of:

   a) simulating the network nodes (A, B, C) and the adjacencies thereof to generate a simulated network;
   b) simulating applying the traffic matrix (1) entry by entry, each application of an entry causing a number of links consistent with the entry to be simulated between the source and destination nodes indicated in the entry, via a chain of topologically adjacent nodes;
   c) simulating the effect of at least one failure (4) on the simulated network, including simulating the re-routing of the links onto a replacement chain where the chain is broken;
   d) determining the number of links between each pair of topologically adjacent nodes; the method being **characterised by** further comprising the steps of:
   e) repeating steps a to d for a plurality of iterations (Iteration 0 ... Iteration N), the order in which the entries in the traffic matrix and the faults are applied being different in different iterations;
   f) for each iteration and for each topologically adjacent pair of nodes, determining an average number of links between the pair of nodes for all iterations so far;
   g) for each iteration and for each pair of topologically adjacent pair of nodes, determining a variance in the average number of links for all iterations so far;
   h) for each iteration, determining an average variance in the average number of links for all iterations so far, the average being taken across the entire network;
   i) for each iteration, determining a variance in the variances in the average number of links for all iterations so far, the variance being taken across the entire network; and
   j) determining when to cease iterating based upon the variance in the variances in the average number of links.

2. The method of claim 1, comprising the step of storing and/or outputting, as a number of links to be provided between each topologically adjacent pair of nodes, the average number of links for that pair of nodes.

3. The method of claim 1, further comprising implementing the network in line with the number of links to be provided between each topologically adjacent pair of nodes.

4. The method of claim 1, in which step j of the method comprises determining whether the variance in the variances in the average number of links is below a threshold.

5. The method of claim 1, in which step j comprises determining whether the variance in the variances in the average number of links has converged to within a predetermined margin of error.

6. The method of claim 1, in which the entries in the traffic matrix (1) each comprise an indication of protection desired for the link.

7. The method of claim 6, in which the protection desired comprises at least one of the following:

   • 1:1 protection, where a backup channel is provided for every link;
   • 1:N protection, where a backup channel is provided for every N links;
   • Fast ReRoute, FRR, where every link in a chain is protected by a backup path that commences from the first node in the link that can be activated should that link fail;
   • Shared risk link group, where any protection circuit cannot be carried over a physical link that is likely to fail at the same time as the link itself;
   • Link or node diversity.

8. The method of claim 6, in which step b comprises simulating both the link and the protection desired.

9. The method of claim 6, in which step c comprises simulating rerouting of a failed link based on the protection applied to the link in line with the protection desired.

10. The method of claim 1 in which the set of adjacencies includes data relating to the physical connections between the nodes.

11. The method of claim 1, in which the entries in the traffic matrix (1) comprise an indication of the bandwidth to be carried by the links.

12. The method of any preceding claim, in which the network is a synchronous network,

13. The method of claim 12, in which the network is one of a SDH, synchronous digital hierarchy, and a SONET, synchronous optical networking, network.

14. A computer program, which when loaded onto a suitable computer, takes a set of network nodes (A, B, C), a set of adjacencies (2) defining which nodes can be connected together directly and so are topologically adjacent and a traffic matrix (1) comprising a plurality of entries each indicating a source node, a destination node and a number being the number of connections from the source node to the destination node that are to be present in the network and causes the computer to carry out the following method steps :

   a) simulating the network nodes (A, B, C) and the adjacencies (2) thereof to generate a simulated network;
   b) simulating applying the traffic matrix (1) entry by entry, each application of an entry causing a number of links consistent with the entry to be simulated between the source and destination nodes indicated in the entry, via a chain of topologically adjacent nodes;
   c) simulating the effect of at least one failure (4) on the simulated network, including simulating the re-routing of the links onto a replacement chain where the chain is broken;
   d) determining the number of links between each pair of topologically adjacent nodes; **characterized in that** the computer program causes the computer to further carry out the steps:
   e) repeating steps a to d for a plurality of iterations (Iteration 0 ... Iteration N), the order in which the entries in the traffic matrix and the faults are applied being different in different iterations;
   f) for each iteration and for each topologically adjacent pair of nodes, determining an average number of links between the pair of nodes for all iterations so far;
   g) for each iteration and for each pair of topologically adjacent pair of nodes, determining a variance in the average number of links for all iterations so far;
   h) for each iteration, determining an average variance in the average number of links for all iterations so far, the average being taken across the entire network;
   i) for each iteration, determining a variance in the variances in the average number of links for all iterations so far, the variance being taken across the entire network; and
   j) determining when to cease iterating based upon the variance in the variances in the average number of links.

15. A computer, programmed to take a set of network nodes, a set of adjacencies defining which nodes can be connected together directly and so are topologically adjacent and a traffic matrix comprising a plurality of entries each indicating a source node, a destination node and a number being the number of connections from the source node to the destination node that are to be present in the network and to carry out the following methods step :

   a) simulating the network nodes and the adjacencies thereof to generate a simulated network;
   b) simulating applying the traffic matrix entry by entry, each application of an entry causing a number of links consistent with the entry to be simulated between the source and destination nodes indicated in the entry, via a chain of topologically adjacent nodes;
   c) simulating the effect of at least one failure on the simulated network, including simulating the re-routing of the links onto a replacement chain where the chain is broken;
   d) determining the number of links between each pair of topologically adjacent nodes; **characterized in that** the computer is programmed to further perform the steps of:
   e) repeating steps (a) to (d) for a plurality of iterations, the order in which the entries in the traffic matrix and the faults are applied being different in different iterations;
   f) for each iteration and for each topologically adjacent pair of nodes, determining an average number of links between the pair of nodes for all iterations so far;
   g) for each iteration and for each pair of topologically adjacent pair of nodes, determining a variance in the average number of links for all iterations so far;
   h) for each iteration, determining an average variance in the average number of links for all iterations so far, the average being taken across the entire network;

i) for each iteration, determining a variance in the variances in the average number of links for all iterations so far, the variance being taken across the entire network; and

j) determining when to cease iterating based upon the variance in the variances in the average number of links.

**Patentansprüche**

1. Verfahren zum Entwerfen eines Netzwerks, wobei ein Satz von Netzknoten (A, B, C), ein Satz von Adjazenzen (2), die definieren, welche Knoten direkt miteinander verbunden werden können und daher topologisch benachbart sind, und eine Verkehrsmatrix (1) gegeben sind, die eine Mehrzahl von Einträgen umfasst, die jeweils einen Ursprungsknoten, einen Zielknoten und eine Zahl anzeigen, welche die Anzahl von Verbindungen vom Ursprungsknoten zum Zielknoten ist, die im Netzwerk vorhanden sein sollen;

wobei das Verfahren die folgenden Schritte umfasst:

a) Simulieren der Netzknoten (A, B, C) und der Adjazenzen davon, um ein simuliertes Netzwerk zu erzeugen;
b) Simulieren eines eintragsweisen Anwendens der Verkehrsmatrix (1), wobei jede Anwendung eines Eintrags bewirkt, dass eine Anzahl von Verbindungsstrecken, die mit dem Eintrag übereinstimmen, zwischen den Ursprungs- und Zielknoten, die im Eintrag angezeigt sind, über eine Kette von topologisch benachbarten Knoten simuliert wird;
c) Simulieren der Auswirkung mindestens einer Störung (4) auf das simulierte Netzwerk, umfassend ein Simulieren des Umleitens der Verbindungsstrecken auf eine Ersatzkette, wenn die Kette unterbrochen wird;
d) Bestimmen der Anzahl von Verbindungsstrecken zwischen jedem Paar von topologisch benachbarten Knoten;

wobei das Verfahren **dadurch gekennzeichnet ist, dass** es ferner die folgenden Schritte umfasst:

e) Wiederholen der Schritte a bis d für eine Mehrzahl von Wiederholungen (Wiederholung 0 ... Wiederholung N), wobei die Reihenfolge, in welcher die Einträge in der Verkehrsmatrix und die Störfälle angewendet werden, bei verschiedenen Wiederholungen verschieden ist;
f) Bestimmen für jede Wiederholung und für jedes topologisch benachbarte Paar von Knoten einer mittleren Anzahl von Verbindungsstrecken zwischen dem Paar von Knoten für alle bisherigen Wiederholungen;
g) Bestimmen für jede Wiederholung und für jedes Paar von topologisch benachbarten Knoten einer Abweichung in der mittleren Anzahl von Verbindungsstrecken für alle bisherigen Wiederholungen;
h) Bestimmen für jede Wiederholung einer mittleren Abweichung in der mittleren Anzahl von Verbindungsstrecken für alle bisherigen Wiederholungen, wobei der Mittelwert über das gesamte Netzwerk genommen wird;
i) Bestimmen für jede Wiederholung einer Abweichung in den Abweichungen in der mittleren Anzahl von Verbindungsstrecken für alle bisherigen Wiederholungen, wobei die Abweichung über das gesamte Netzwerk genommen wird; und
j) Bestimmen auf der Basis der Abweichung in den Abweichungen in der mittleren Anzahl von Verbindungsstrecken, wann mit dem Wiederholen aufgehört werden soll.

2. Verfahren nach Anspruch 1, umfassend den Schritt des Speicherns und/oder Ausgebens als eine Anzahl von Verbindungsstrecken, die zwischen jedem topologisch benachbarten Paar von Knoten bereitgestellt werden sollen, der mittleren Anzahl von Verbindungsstrecken für dieses Paar von Knoten.

3. Verfahren nach Anspruch 1, ferner umfassend ein Implementieren des Netzwerks in Übereinstimmung mit der Anzahl von Verbindungsstrecken, die zwischen jedem topologisch benachbarten Paar von Knoten bereitgestellt werden sollen.

4. Verfahren nach Anspruch 1, wobei Schritt j des Verfahrens ein Bestimmen umfasst, ob die Abweichung in den Abweichungen in der mittleren Anzahl von Verbindungsstrecken unteren einem Schwellenwert ist.

5. Verfahren nach Anspruch 1, wobei Schritt j ein Bestimmen umfasst, ob sich die Abweichung in den Abweichungen in der mittleren Anzahl von Verbindungsstrecken innerhalb eines vorbestimmten Fehlerbereichs angenähert hat.

6. Verfahren nach Anspruch 1, wobei die Einträge in der Verkehrsmatrix (1) jeweils eine Anzeige von Sicherung umfassen, der für die Verbindungsstrecke gewünscht wird.

7. Verfahren nach Anspruch 6, wobei die gewünschte Sicherung wenigstens eines von Folgendem umfasst:

- 1:1-Sicherung, wobei ein Ersatzkanal für jede Verbindungsstrecke bereitgestellt wird;
- 1:N-Sicherung, wobei ein Ersatzkanal für alle N Verbindungsstrecken bereitgestellt wird;
- Fast ReRoute bzw. FRR, w o b ei jede Verbindungsstrecke in einer Kette durch einen Ersatzweg gesichert wird, der am ersten Knoten in der Verbindungsstrecke beginnt, der aktiviert werden kann, sollte diese Verbindungsstrecke ausfallen;
- Verbindungsstreckengruppe mit geteiltem Risiko, wobei ein beliebiger Sicherungskreis nicht über eine physikalische Verbindungsstrecke geführt werden kann, die wahrscheinlich zum gleichen Zeitpunkt wie die Verbindungsstrecke selbst ausfällt;
- Verbindungsstrecken- oder Knotendiversität.

8. Verfahren nach Anspruch 6, wobei Schritt b ein Simulieren sowohl der Verbindungsstrecke als auch der gewünschten Sicherung umfasst.

9. Verfahren nach Anspruch 6, wobei Schritt c ein Simulieren des Umleitens einer ausgefallenen Verbindungsstrecke basierend auf der Sicherung umfasst, die auf die Verbindungsstrecke in Übereinstimmung mit der gewünschten Sicherung angewendet wird.

10. Verfahren nach Anspruch 1, wobei der Satz von Adjazenzen Daten in Bezug auf die physikalischen Verbindungen zwischen den Knoten umfasst.

11. Verfahren nach Anspruch 1, wobei die Einträge in der Verkehrsmatrix (1) eine Anzeige der Bandbreite umfassen, die durch die Verbindungsstrecken zu übertragen ist.

12. Verfahren nach einem der vorhergehenden Ansprüche, wobei das Netzwerk ein synchrones Netzwerk ist.

13. Verfahren nach Anspruch 12, wobei das Netzwerk eines von einem Synchron-Digital-Hierarchie- bzw. SDH- und einem synchronen optischen Vernetzungs- bzw. SONET-Netzwerk ist.

14. Computerprogramm, welches, wenn auf einen geeigneten Computer geladen, einen Satz von Netzknoten (A, B, C), einen Satz von Adjazenzen (2), die definieren, welche Knoten direkt miteinander verbunden werden können und daher topologisch benachbart sind, und eine Verkehrsmatrix (1) nimmt, die eine Mehrzahl von Einträgen umfasst, die jeweils einen Ursprungsknoten, einen Zielknoten und eine Zahl anzeigen, welche die Anzahl von Verbindungen vom Ursprungsknoten zum Zielknoten ist, die im Netzwerk vorhanden sein sollen, und den Computer veranlasst, die folgenden Verfahrensschritte auszuführen:

a) Simulieren der Netzknoten (A, B, C) und der Adjazenzen (2) davon, um ein simuliertes Netzwerk zu erzeugen;
b) Simulieren eines eintragsweisen Anwendens der Verkehrsmatrix (1), wobei jede Anwendung eines Eintrags bewirkt, dass eine Anzahl von Verbindungsstrecken, die mit dem Eintrag übereinstimmen, zwischen den Ursprungs- und Zielknoten, die im Eintrag angezeigt sind, über eine Kette von topologisch benachbarten Knoten simuliert wird;
c) Simulieren der Auswirkung mindestens einer Störung (4) auf das simulierte Netzwerk, umfassend ein Simulieren des Umleitens der Verbindungsstrecken auf eine Ersatzkette, wenn die Kette unterbrochen wird;
d) Bestimmen der Anzahl von Verbindungsstrecken zwischen jedem Paar von topologisch benachbarten Knoten;

**dadurch gekennzeichnet, dass** das Computerprogramm den Computer veranlasst, ferner die folgenden Schritte auszuführen:

e) Wiederholen der Schritte a bis d für eine Mehrzahl von Wiederholungen (Wiederholung 0 ... Wiederholung N), wobei die Reihenfolge, in welcher die Einträge in der Verkehrsmatrix und die Störfälle angewendet werden, bei verschiedenen Wiederholungen verschieden ist;
f) Bestimmen für jede Wiederholung und für jedes topologisch benachbarte Paar von Knoten einer mittleren Anzahl von Verbindungsstrecken zwischen dem Paar von Knoten für alle bisherigen Wiederholungen;
g) Bestimmen für jede Wiederholung und für jedes Paar von topologisch benachbarten Knoten einer Abweichung in der mittleren Anzahl von Verbindungsstrecken für alle bisherigen Wiederholungen;
h) Bestimmen für jede Wiederholung einer mittleren Abweichung in der mittleren Anzahl von Verbindungsstrecken für alle bisherigen Wiederholungen, wobei der Mittelwert über das gesamte Netzwerk genommen wird;
i) Bestimmen für jede Wiederholung einer Abweichung in den Abweichungen in der mittleren Anzahl von Verbindungsstrecken für alle bisherigen Wiederholungen, wobei die Abweichung über das gesamte Netzwerk genommen wird; und

j) Bestimmen auf der Basis der Abweichung in den Abweichungen in der mittleren Anzahl von Verbindungsstrecken, wann mit dem Wiederholen aufgehört werden soll.

**15.** Computer, der so programmiert ist, dass er einen Satz von Netzknoten, einen Satz von Adjazenzen, die definieren, welche Knoten direkt miteinander verbunden werden können und daher topologisch benachbart sind, und eine Verkehrsmatrix nimmt, die eine Mehrzahl von Einträgen umfasst, die jeweils einen Ursprungsknoten, einen Zielknoten und eine Zahl anzeigen, welche die Anzahl von Verbindungen vom Ursprungsknoten zum Zielknoten ist, die im Netzwerk vorhanden sein sollen, und die folgenden Verfahrensschritte ausführt:

a) Simulieren der Netzknoten und der Adjazenzen davon, um ein simuliertes Netzwerk zu erzeugen;
b) Simulieren eines eintragsweisen Anwendens der Verkehrsmatrix, wobei jede Anwendung eines Eintrags bewirkt, dass eine Anzahl von Verbindungsstrecken, die mit dem Eintrag übereinstimmen, zwischen den Ursprungs- und Zielknoten, die im Eintrag angezeigt sind, über eine Kette von topologisch benachbarten Knoten simuliert wird;
c) Simulieren der Auswirkung mindestens einer Störung auf das simulierte Netzwerk, umfassend ein Simulieren des Umleitens der Verbindungsstrecken auf eine Ersatzkette, wenn die Kette unterbrochen wird;
d) Bestimmen der Anzahl von Verbindungsstrecken zwischen jedem Paar von topologisch benachbarten Knoten;

**dadurch gekennzeichnet, dass** der Computer so programmiert ist, dass er ferner die folgenden Schritte ausführt:

e) Wiederholen der Schritte (a) bis (d) für eine Mehrzahl von Wiederholungen, wobei die Reihenfolge, in welcher die Einträge in der Verkehrsmatrix und die Störfälle angewendet werden, bei verschiedenen Wiederholungen verschieden ist;
f) Bestimmen für jede Wiederholung und für jedes topologisch benachbarte Paar von Knoten einer mittleren Anzahl von Verbindungsstrecken zwischen dem Paar von Knoten für alle bisherigen Wiederholungen;
g) Bestimmen für jede Wiederholung und für jedes Paar von topologisch benachbarten Knoten einer Abweichung in der mittleren Anzahl von Verbindungsstrecken für alle bisherigen Wiederholungen;
h) Bestimmen für jede Wiederholung einer mittleren Abweichung in der mittleren Anzahl von Verbindungsstrecken für alle bisherigen Wiederholungen, wobei der Mittelwert über das gesamte Netzwerk genommen wird;
i) Bestimmen für jede Wiederholung einer Abweichung in den Abweichungen in der mittleren Anzahl von Verbindungsstrecken für alle bisherigen Wiederholungen, wobei die Abweichung über das gesamte Netzwerk genommen wird; und
j) Bestimmen auf der Basis der Abweichung in den Abweichungen in der mittleren Anzahl von Verbindungsstrecken, wann mit dem Wiederholen aufgehört werden soll.

## Revendications

**1.** Procédé de conception d'un réseau étant donné un jeu de noeuds de réseau (A, B, C), un jeu d'adjacences (2) définissant quels noeuds peuvent être connectés les uns aux autres directement et sont donc topologiquement adjacents et une matrice de trafic (1) comprenant une pluralité d'entrés indiquant chacune un noeud de source, un noeud de destination et un nombre étant le nombre de connexions du noeud de source au noeud de destination qui doivent être présents dans le réseau ; le procédé comprenant les étapes consistant à :

a) simuler les noeuds de réseau (A,B,C) et les adjacences de ceux-ci pour générer un réseau simulé ;
b) simuler l'application de la matrice de trafic (1) entrée par entrée, chaque application d'une entrée amenant un nombre de liaisons cohérentes avec l'entrée à être simulée entre les noeuds de source et de destination indiqués dans l'entrée, via une chaîne de noeud topologiquement adjacents ;
c) simuler l'effet d'au moins une défaillance (4) sur le réseau simulé, incluant de simuler le reroutage des liaisons sur une chaîne de remplacement là où la chaîne est rompue ;
d) déterminer le nombre de liaisons entre chaque paire de noeuds topologiquement adjacents ;

le procédé étant **caractérisé en ce que** il comprend en outre les étapes consistant à :

e) répéter les étapes a à d pour une pluralité d'itérations (itération 0...itération N), l'ordre dans lequel les entrées dans la matrice de trafic et les anomalies sont appliquées étant différent dans des itérations différentes ;
f) pour chaque itération et pour chaque paire topologiquement adjacente de noeuds, déterminer un nombre moyen de liaisons entre la paire de noeuds pour toutes les itérations jusqu'à présent ;

g) pour chaque itération et pour chaque paire de paire noeuds topologiquement adjacents, déterminer une variance dans le nombre moyen de liaisons pour toutes les itérations jusqu'à présent ;

h) pour chaque itération, déterminer une variance moyenne dans le nombre moyen de liaisons pour toutes les itérations jusqu'à présent, la moyenne étant prise à travers la totalité du réseau ;

i) pour chaque itération, déterminer une variance dans les variances du nombre moyen de liaisons pour toues les itérations jusqu'à présent, la variance étant prise à travers la totalité du réseau ; et

j) déterminer quand cesser l'itération sur la base de la variance dans les variances du nombre moyen de liaisons.

2. Procédé selon la revendication 1, comprenant l'étape de mémorisation et/ou délivrance, comme un nombre de liaisons à fournir entre chaque paire de noeuds topologiquement adjacents, du nombre moyen de liaisons pour cette paire de noeuds.

3. Procédé selon la revendication 1, comprenant en outre l'implémentation du réseau en ligne avec le nombre de liaisons à fournir entre chaque paire de noeuds topologiquement adjacents.

4. Procédé selon la revendication 1, dans lequel l'étape j du procédé comprend de déterminer si la variance dans les variances du nombre moyen de liaisons est inférieure à un seuil.

5. Procédé selon la revendication 1, dans lequel l'étape j comprend de déterminer si la variance dans les variances du nombre moyen de liaisons a convergé dans les limites d'une marge d'erreur prédéterminée.

6. Procédé selon la revendication 1, dans lequel les entrées dans la matrice de trafic (1) comprennent chacune une indication d'une protection désirée pour la liaison.

7. Procédé selon la revendication 6, dans lequel la protection désirée comprend au moins une de ce qui suit :

• Protection 1 :1, où un canal de réserve est fourni pour chaque liaison ;
• Protection 1 :N, où un canal de réserve est fourni pour chaque N liaisons ;
• Reroutage rapide, FRR, où chaque liaison dans une chaîne est protégée par un conduit de réserve qui commence au premier noeud dans la liaison qui peut être activé si cette liaison devait connaître une défaillance ;
• Groupe de liaisons à risque partagé, où tout circuit de protection ne peut pas être transporté sur une liaison physique qui est susceptible de connaître une défaillance en même temps que la liaison même ;
• Diversité de liaisons ou de noeuds.

8. Procédé selon la revendication 6, dans lequel l'étape b comprend de simuler à la fois la liaison et la protection désirées.

9. Procédé selon la revendication 6, dans lequel l'étape c comprend de simuler le reroutage d'une liaison défaillante sur la base de la protection appliquée à la liaison en ligne avec la protection désirée.

10. Procédé selon la revendication 1, dans lequel le jeu d'adjacences inclut des données relatives aux connexions physiques entre les noeuds.

11. Procédé selon la revendication 1, dans lequel les entrées dans la matrice de trafic (1) comprennent une indication de la bande passante transportée par les liaisons.

12. Procédé selon une quelconque des revendications précédentes, dans lequel le réseau est un réseau synchrone.

13. Procédé selon la revendication 12, dans lequel le réseau est un d'un réseau SDH, à hiérarchie numérique synchrone, et SONET, réseau optique synchrone.

14. Programme informatique, qui quand il est chargé sur un ordinateur approprié, prend un jeu de noeuds de réseau (A,B,C), un jeu d'adjacences (2) définissant quels noeuds peuvent être connectés les uns aux autres directement et sont donc topologiquement adjacents et une matrice de trafic (1) comprenant une pluralité d'entrées indiquant chacune un noeud de source, un noeud de destination et un nombre étant le nombre de connexions du noeud de source au noeud de destination qui doivent être présentes dans le réseau et amène l'ordinateur à mettre en oeuvre les étapes de procédé suivantes :

a) simuler les noeuds de réseau (A,B,C) et les adjacences de ceux-ci pour générer un réseau simulé ;

b) simuler l'application de la matrice de trafic (1) entrée par entrée, chaque application d'une entrée amenant un nombre de liaisons cohérentes avec l'entrée à être simulée entre les noeuds de source et de destination indiqués dans l'entrée, via une chaîne de noeud topologiquement adjacents ;

c) simuler l'effet d'au moins une défaillance (4) sur le réseau simulé, incluant de simuler le reroutage des liaisons sur une chaîne de remplacement là où la chaîne est rompue ;

d) déterminer le nombre de liaisons entre chaque paire de noeuds topologiquement adjacents ;

**caractérisé en ce que** le programme informatique amène l'ordinateur à mettre en oeuvre en outre les étapes consistant à :

e) répéter les étapes a à d pour une pluralité d'itérations (itération 0...itération N), l'ordre dans lequel les entrées dans la matrice de trafic et les anomalies sont appliquées étant différent dans des itérations différentes ;

f) pour chaque itération et pour chaque paire topologiquement adjacente de noeuds, déterminer un nombre moyen de liaisons entre la paire de noeuds pour toutes les itérations jusqu'à présent ;

g) pour chaque itération et pour chaque paire de paire noeuds topologiquement adjacents, déterminer une variance dans le nombre moyen de liaisons pour toutes les itérations jusqu'à présent ;

h) pour chaque itération, déterminer une variance moyenne dans le nombre moyen de liaisons pour toutes les itérations jusqu'à présent, la moyenne étant prise à travers la totalité du réseau ;

i) pour chaque itération, déterminer une variance dans les variances du nombre moyen de liaisons pour toues les itérations jusqu'à présent, la variance étant prise à travers la totalité du réseau ; et

j) déterminer quand cesser l'itération sur la base de la variance dans les variances du nombre moyen de liaisons.

**15.** Ordinateur, programmé pour prendre un jeu de noeuds de réseau, un jeu d'adjacences définissant quels noeuds peuvent être connectés les uns aux autres directement et sont donc topologiquement adjacents et une matrice de trafic comprenant une pluralité d'entrées indiquant chacune un noeud de source, un noeud de destination et un nombre étant le nombre de connexions du noeud de source au noeud de destination qui doivent être présentes dans le réseau et pour mettre en oeuvre les étapes de procédé suivantes :

a) simuler les noeuds de réseau et les adjacences de ceux-ci pour générer un réseau simulé ;

b) simuler l'application de la matrice de trafic entrée par entrée, chaque application d'une entrée amenant un nombre de liaisons cohérentes avec l'entrée à être simulée entre les noeuds de source et de destination indiqués dans l'entrée, via une chaîne de noeud topologiquement adjacents ;

c) simuler l'effet d'au moins une défaillance sur le réseau simulé, incluant de simuler le reroutage des liaisons sur une chaîne de remplacement là où la chaîne est rompue ;

d) déterminer le nombre de liaisons entre chaque paire de noeuds topologiquement adjacents ; **caractérisé en ce que** l'ordinateur est programmé pour effectuer en outre les étapes consistant à:

e) répéter les étapes (a) à (d) pour une pluralité d'itérations, l'ordre dans lequel les entrées dans la matrice de trafic et les anomalies sont appliquées étant différent dans des itérations différentes ;

f) pour chaque itération et pour chaque paire topologiquement adjacente de noeuds, déterminer un nombre moyen de liaisons entre la paire de noeuds pour toutes les itérations jusqu'à présent ;

g) pour chaque itération et pour chaque paire de paire noeuds topologiquement adjacents, déterminer une variance dans le nombre moyen de liaisons pour toutes les itérations jusqu'à présent ;

h) pour chaque itération, déterminer une variance moyenne dans le nombre moyen de liaisons pour toutes les itérations jusqu'à présent, la moyenne étant prise à travers la totalité du réseau ;

i) pour chaque itération, déterminer une variance dans les variances du nombre moyen de liaisons pour toues les itérations jusqu'à présent, la variance étant prise à travers la totalité du réseau ; et

j) déterminer quand cesser l'itération sur la base de la variance dans les variances du nombre moyen de liaisons.

# Fig.1.

Automatic Optimization Iterations →

**1** Traffic Matrix

**2** Network Adjacencies

**3** Capacity planning algorithm

**4** Failures

### ITERATION 0
ADJ0
adj_average_0_0
adj_variance_0_0

ADJk
adj_average_k_0
adj_variance_k_0

ADJ Nadj
adj_average_Nadj_0
adj_variance_Nadj_0

### ITERATION n
ADJ0
adj_average_0_n
adj_variance_0_n

ADJk
adj_average_k_n
adj_variance_k_n

ADJ Nadj
adj_average_Nadj_n
adj_variance_Nadj_n

### ITERATION N
ADJ0
adj_average_0_N
adj_variance_0_N

ADJk
adj_average_k_N
adj_variance_k_N

ADJ Nadj
adj_average_Nadj_N
adj_variance_Nadj_N

PORTS_0

PORTS_k

PORTS_Nadj

net_average_0
net_variance_0

net_average_n
net_variance_n

net_average_N
net_variance_N

**5**

EP 2 191 611 B1

# Fig.2.

adj1

21

adj2

22

B

23

A

adj3

C

# Fig.3.

net_average_n

## Fig.4.

net_variance_n

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102004057496 A1

- US 6768718 B1